# EUROPEAN PATENT APPLICATION

(11) **EP 0 587 217 A1**
(43) Date of publication of application: **16.03.1994**
(21) Application number: 93202457.3
(22) Date of filing: 20.08.1993
(51) Int. Cl.: B60T 7/20, B60T 13/10

(54) **Overrun brake actuator**

(30) Priority: 20.08.1992 NL 9201489
(71) Applicant: Sanders, Teun Johan Hugo Leendert, NL-6862 WG Oosterbeek (NL)
(72) Inventor: Sanders, Teun Johan Hugo Leendert, NL-6862 WG Oosterbeek (NL); Van Aalst-Slootmans, Christiana, NL-1531 VB Wormer (NL)
(74) Representative: 't Jong, Bastiaan Jacobus

(57) **Abstract**

The invention relates to a trailer comprising a frame, wheels mounted on the frame and provided with a wheel brake, a coupling (2) mounted on the frame for movement in the direction of travel and a transmission mechanism (5) for transmitting a movement of the coupling to the wheel brake system as a control movement and further provided with an auxiliary braking device comprising a pressure fluid motor (26) which engages onto the transmission mechanism and which is connected via a valve device (7) to a source of medium under pressure (8). The valve device comprises an electrically operated feed valve (24) and a variable reducing valve (22) which is connected to the coupling such that when the coupling is moved rearward a higher pressure is adjusted in the conduit to the pressure fluid motor.

## Description

The present invention relates to a trailer with an overrun brake and an auxiliary device as known for example from the European patent application 0 319 070.

The auxiliary braking device operates pneumatically and engages onto the transmission in the overrun brake mechanism. The auxiliary brake is activated as soon as the brake pedal is depressed in the tractive vehicle and the brake light switch is activated. The electrical signal which activates the brake lights also activates the auxiliary braking device.

With such an auxiliary braking device the road handling of the combination of which the trailer forms part is improved, particularly during braking from higher speeds and descent of inclines, in which cases the danger of lurching from side to side can be considerably reduced.

The invention now has for its object to further improve a trailer of the type described in the preamble. According to the invention this is achieved with a trailer as characterized in claim 1. Use of the variable reducing valve achieves that the pressure in the auxiliary brake system increases, and that the braking action thus becomes stronger, when the coupling is pressed further in and therefore when the tractive vehicle brakes harder. The auxiliary braking device can hereby have a substantially proportional braking action which results in a very favourable handling of the trailer during braking.

In preference the step of claim 2 is applied. The auxiliary braking device operates with the adjusted fixed minimum value of the pressure as soon as a braking action is initiated, so that a rapid response of the system is obtained.

The step of claim 3 results in a device that is simple to mount and service.

Through application of the step of claim 4 is achieved in favourable manner that the pressure in the conduit to the pneumatic motor can also decrease again when braking is less strong. The auxiliary braking device hereby adapts itself precisely to the braking action performed by the driver of the tractive vehicle.

A further favourable development is characterized in claim 5. The increase in the pressure in the case of a stronger braking action is transmitted immediately to the pneumatic motor. A decrease in the pressure when the braking action is reduced is transmitted with a slight delay so that braking of the trailer lasts slightly longer than that of the pulling vehicle, whereby the combination remains stable, that is, the trailer remains straight behind the pulling vehicle. Particularly during descent of inclines such a braking action is favourable to prevent lurching.

The step of claim 6 is preferably applied. When the driver of the tractive vehicle releases the brake pedal and thereby switches off the activating signal for the auxiliary braking device, the pneumatic motor is switched immediately to pressureless state so that the braking action ceases.

A further favourable embodiment herein is characterized in claim 7. Due to the quick-action venting valve a very fast response is obtained and the feed valve does not have to comprise any large bores for rapid draining of the pressure, which has a favourable effect on the cost of the device.

A suitable embodiment of the pneumatic motor for operating the trailer brake is characterized in claim 8. This can exert a great force at a limited stroke and pressure in the pneumatic system and can therefore be applied suitably in many existing trailers.

The invention is elucidated hereinbelow with reference to an embodiment shown in the figures.

Fig. 1 shows schematically a vehicle with coupled-on trailer at the position of the coupling.

Fig. 2 shows a circuit diagram of a preferred embodiment of the auxiliary braking device according to the invention.

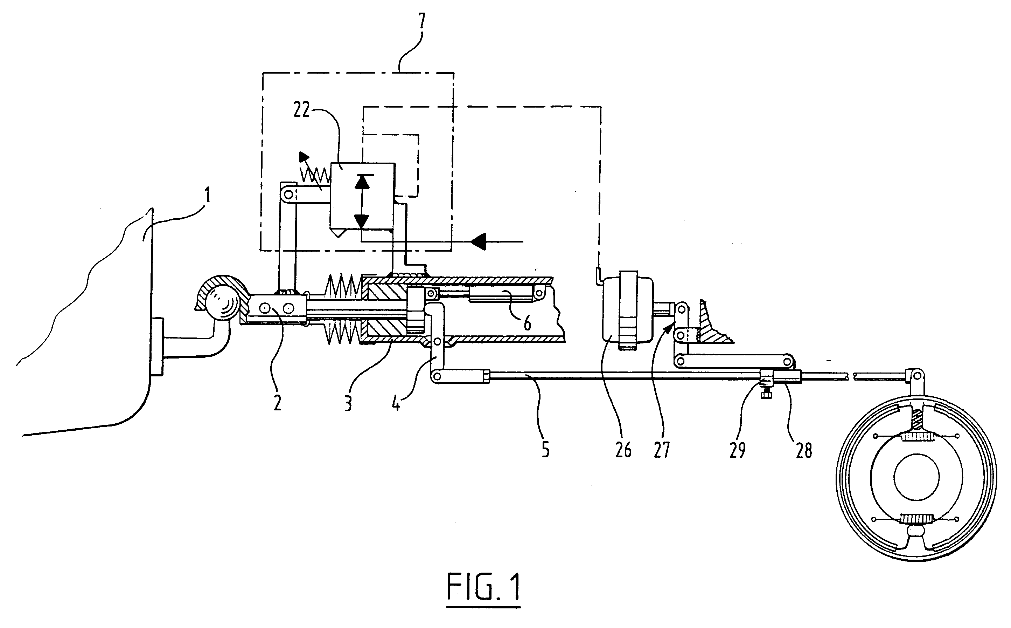

Fig. 1 shows schematically the coupling 2 and draw-bar 3 of a trailer according to the invention which is coupled to the tow ball of a tractive vehicle 1.

The trailer is provided with an overrun brake which is generally known and will only be described here insofar as it relates to the present invention.

The coupling 2 of the trailer is mounted in the draw-bar 3 for sliding in the direction of travel. Likewise arranged in draw-bar 3 is a lever 4 which rests with one end against a part of a sliding rod connected to the coupling 2. The lever 4 is mounted pivotally in draw-bar 3 and at the other end a pull rod 5 is connected to lever 4. This pull rod is connected to the wheel brakes such that when a tensile force is applied thereto the wheel brakes come into operation. The greater the tensile force is, the stronger the braking action is. The trailer is further provided with a spring/damper combination 6 which normally urges the coupling 2 into the extended position.

When now during travel the tractive vehicle 1 brakes, the coupling 2 will slide in relative to draw-bar 3 due to the inertia of the trailer, whereby the lever 4 pivots clockwise as seen in fig. 1 and a tensile force is applied to the pull rod 5 which sets the brakes of the trailer into operation.

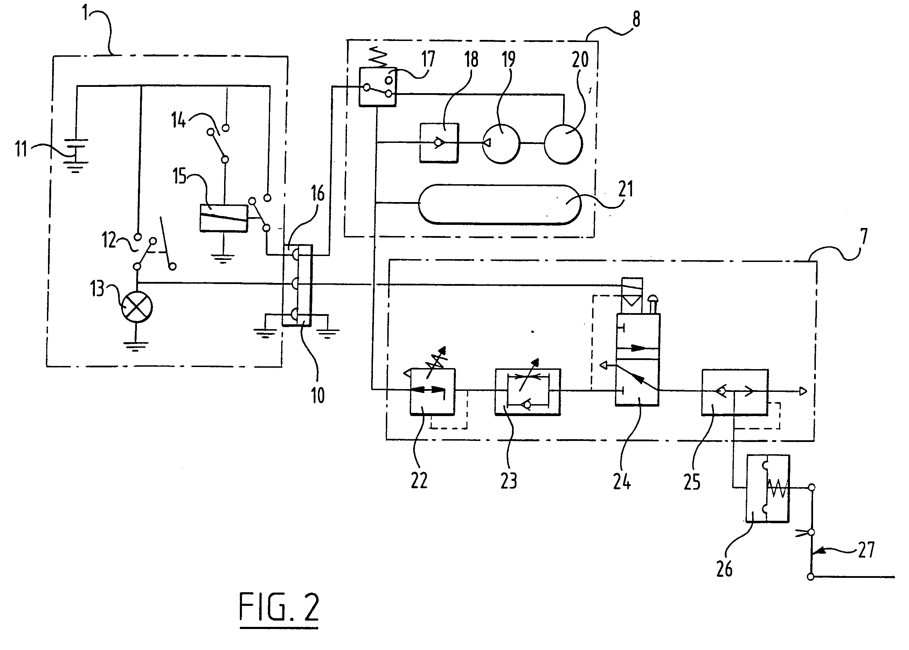

In addition to this overrun brake device the trailer according to the invention is provided with an auxiliary braking device which operates pneumatically. This auxiliary braking device has as operational component a pneumatic motor which in this embodiment is a diaphragm cylinder 26. The rod of this diaphragm cylinder 26 is coupled via a transmission mechanism 27 to the pull rod 5 such that when compressed air is fed to the diaphragm cylinder 26 a tensile force is exerted on the pull rod 5 which has the above described effect of setting into operation the wheel brakes of the trailer. The mechanism 27 therein comprises a slide piece 28 which, when the tensile force is exerted, comes to lie against a fixedly clampable adjusting ring 29. Hereby, when the auxiliary brake is deactivated, the normal braking device can function without the mechanism 27 and cylinder 26 being able to impede the operation thereof. To provide the diaphragm cylinder 26 with compressed air there is a compressor device 8 and a valve device 7, which are shown schematically for the sake of clarity in fig. 2.

The compressor device 8 comprises a compressor 19 which is driven by an electric motor 20 and which communicates with a pressure vessel 21 via a non-return valve 18. The electric motor 20 is switched on and off with a pressure switch 17 which is provided with electrical current via the electric connecting plug 10 of the trailer which is inserted into the socket box 16 of pulling vehicle 1.

Pulling vehicle 1 is equipped in the usual manner with a battery 11 as voltage source. Included in the electrical circuit connected to the pressure switch 17 is a contact of a relay 15, which relay is switched on when the ignition lock 14 of the vehicle 1 is switched on. Therefore as soon as the ignition lock of the tractive vehicle 1 is switched on electrical voltage is applied to the lead to the pressure switch 17. The latter subsequently switches on the electric motor 20 when the pressure in the pressure vessel lies below a determined minimum value, for instance 6 bar. As soon as the pressure has reached a determined maximum value, for instance 8 bar, the pressure switch 17 switches the electric motor 20 off again. The pressure switch 17 remains operative to hold the pressure in pressure vessel 21 between the said limits.

The tractive vehicle 1 is further provided in the usual manner with a brake light switch 12 which, when the brake pedal is depressed, is activated to switch on brake lights 13. The electrical brake light lead is connected into the socket box 16 to simultaneously switch on the brake lights connected thereto of the trailer.

This electrical connection for the brake lights is further connected to a feed valve 24 which forms part of the valve device 7 of the auxiliary braking device.

Valve device 7 comprises in addition to feed valve 24 a variable reducing valve 22 to be described hereinafter, a parallel circuit 23 of a non-return valve and an adjustable restriction and a quick-action venting valve 25. The valves 22, 23, 24, 25 are connected in series in this sequence in the valve device 7 and thus connected between the compressor device 8 and the pneumatic motor embodied as diaphragm cylinder 26.

The variable reducing valve 22 has a fixed setting to a minimum pressure of for instance 1 bar. Therefore as soon as the brake light switch 12 is closed the feed valve 24 will bring about a connection to the diaphragm cylinder 26 so that compressed air is fed to this diaphragm cylinder 26 at this set pressure of 1 bar. The diaphragm cylinder thereby exerts a determined minimum force on pull rod 5 for operation of the wheel brakes of the trailer.

As shown schematically in fig. 1, the variable reducing valve 22 is connected to the coupling 2 such that when the coupling 2 is displaced to the rear, that is, as seen in fig. 1 a movement of the coupling 2 to the right relative to the trailer, a higher pressure is adjusted in the conduit to the pneumatic motor formed here by the diaphragm 26.

The variable reducing valve, as noted, thus adjusts a higher pressure in the conduit to diaphragm cylinder 26 when the coupling 2 is pressed in further. The more strongly the tractive vehicle 1 brakes, the further the coupling 2 is pressed in. A higher pressure in diaphragm cylinder 26 results in a greater tensile force on pull rod 5 and therefore a greater braking action of the trailer. The variable reducing valve 22 therefore ensures that the braking action of the trailer increases with an increasing braking deceleration of tractive vehicle 1.

With a decreasing braking action the pressure adjusted in the conduit to diaphragm cylinder 26 by the reducing valve 22 will also decrease. Because the reducing valve in this preferred embodiment is of a type with correction outlet, this lower pressure is also directly adjusted in that excess air is drained via the valve. The braking action exerted by the trailer thus remains substantially proportional to that of the tractive vehicle 1.

The above mentioned parallel circuit 13 of non-return valve and adjustable restriction, also described as a speed control valve, determines how quickly the diaphragm cylinder responds to changes in the pressure as a result of adjustment of reducing valve 22.

An increase in the pressure at increasing braking deceleration is transmitted immediately via the non-return valve opening in this direction. A lessening of the pressure is transmitted to the diaphragm cylinder delayed via the restriction. The braking action of the trailer thus remains active slightly longer in the case of decreasing braking deceleration, which has a positive effect on the road holding because the trailer in particular remains properly straight behind the tractive vehicle 1 and does not begin to lurch.

The feed valve 24 is embodied such that in the activated situation it forms a direct connection of, in this embodiment, the parallel circuit 23 to diaphragm cylinder 26 and in the deactivated situation closes the connection to the parallel circuit and connects diaphragm cylinder 26 with the outside air. Therefore as soon as the brake light switch is switched off the pressure can drain out of the diaphragm cylinder 26. In order to directly deactivate the braking action of the auxiliary braking device as soon as the brake pedal of tractive vehicle 1 is released, a quick-action venting valve 25 is used which allows the air to escape out of diaphragm cylinder 26 at a greater speed than could occur via feed valve 24.

The embodying of the pneumatic motor as diaphragm cylinder is of course not the only one possible. It is for instance also possible to make use of a pneumatic cylinder with a hollow piston rod through which the pull rod 5 is guided. A transmission mechanism such as mechanism 27 is in that case superfluous.

The trailer according to the invention can be used with any tractive vehicle which has a so-called constant current supply wire in the electrical socket box 16. This constant current supply wire is used in this case to feed the compressor device 8.

The auxiliary braking device must be adjusted for the relevant trailer. That is, the minimum pressure in the system and the characteristic of the action of the reducing valve must be adapted to the conditions of the relevant trailer. This can take place on a brake test bench. Once the settings have been made the trailer can co-act with any random tractive vehicle.

With comparatively simple means the trailer according to the invention has very reliable and thereby safe road handling.

## Claims

1. Trailer comprising a frame, wheels mounted on the frame and provided with a wheel brake, a coupling mounted on the frame for movement in the direction of travel and a transmission mechanism for transmitting a movement of the coupling to the wheel brake system as a control movement and further provided with an auxiliary braking device comprising a pressure fluid motor which engages onto the transmission mechanism and which is connected via a valve device to a source of medium under pressure, which valve device comprises an electrically operated feed valve and a variable reducing valve which is connected to the coupling such that when the coupling is moved rearward a higher pressure is adjusted in the conduit to the pressure fluid motor.

2. Trailer as claimed in claim 1, wherein the variable reducing valve is set to a fixed minimum value.

3. Trailer as claimed in claim 1 or 2, wherein the pressure fluid motor is a pneumatic motor and the source of medium under pressure is a compressor device.

4. Trailer as claimed in claim 3, wherein the variable reducing valve is of a type with correction outlet.

5. Trailer as claimed in any of the claims 3-4, wherein the valve device comprises a parallel circuit, between the reducing valve and the pneumatic motor, of a restriction and a non-return valve allowing air through in the direction to the pneumatic motor.

6. Trailer as claimed in any of the claims 3-5, wherein the feed valve is a two-way valve which in an electrically activated position forms a continuous connection and in non-activated rest position closes the connection to the air compressor device and connects the pneumatic motor with the outside air.

7. Trailer as claimed in claim 6, wherein a quick-action venting valve is connected between the feed valve and the pneumatic motor.

8. Trailer as claimed in any of the claims 3-7, wherein the pneumatic motor is a single-action diaphragm cylinder.

9. Trailer as claimed in any of the claims 3-8, wherein the compressor device comprises a compressor driven by an electric motor and connected to a pressure vessel and a pressure switch which independently switches on the electric motor at a pressure below a set minimum pressure and switches it off at a pressure above a set maximum pressure.
